# EUROPÄISCHE PATENTSCHRIFT

(11) **EP 2 602 215 B1**
(45) Veröffentlichungstag und Bekanntmachung des Hinweises auf die Patenterteilung: **03.09.2014**
(21) Anmeldenummer: 12192696.8
(22) Anmeldetag: 15.11.2012
(51) Int. Cl.: B65G 63/02, B65G 67/20, B61D 47/00

(54) **Logistiksystem für kombinierten Warenverkehr, sowie Schienenfahrzeug und Übergabestation für selbiges**
Logistics system for combined movement of goods, and railway vehicle and transfer station for the same
Système logistique pour le transport combiné de marchandises, ainsi que véhicule sur rail et station de transmission pour celui-ci

(30) Priorität: 08.12.2011 DE 102011087985; 13.01.2012 DE 102012200446
(43) Veröffentlichungstag der Anmeldung: 12.06.2013
(73) Patentinhaber: Buse, Heinz, 26160 Bad Zwischenahn (DE)
(72) Erfinder: Buse, Heinz, 26160 Bad Zwischenahn (DE)
(74) Vertreter: Eisenführ Speiser

(56) Entgegenhaltungen:
- EP-A1- 2 386 506
- DE-A1- 10 258 405
- DE-A1- 19 850 515
- DE-U1- 9 105 882
- GB-A- 2 108 473

## Beschreibung

Die vorliegende Erfindung betrifft ein Logistiksystem zur Übergabe eines Ladungsträgers zu Fahrzeugen, und/oder zur Übernahme des Ladungsträgers von Fahrzeugen, nach dem Oberbegriff des Anspruchs 1, sowie eine Übergabestation nach dem Oberbegriff des Anspruchs 14.

Logistiksysteme der vorstehend genannten Art sind bekannt aus dem Logistikbereich des sogenannten Verteilverkehrs. Unter Verteilverkehr wird insbesondere der Transport von Waren im Nahverkehr mittels Straßenfahrzeugen verstanden. Hierbei werden als Ansteuerungspunkte die Start- und Zielorte der Waren sowie Logistikzentren, beispielsweise Verteilerzentren, miteinander verknüpft. Hierbei vorgesehene Logistikzentren weisen üblicherweise Lager oder Kommissionierungseinheiten zum Bevorraten und Verarbeiten der angelieferten und abgelieferten Waren auf.

Bei bereits vorhandenen Lagern oder Kommissionierungseinheiten gibt es eine Vielzahl von Andockstationen (auch als Hallentore bezeichnet), an die LKWs jeweils mit ihrer

Rückseite heranfahren können, um die Güter zu übernehmen. Solche Güterlager oder Kommissionierungseinheiten bestehen in einer großen Vielzahl und häufig gibt es die Möglichkeit, dass eine Vielzahl von Fahrzeugen gleichzeitig an die Andockstationen, die jeweils in einer Gebäudewand miteinander fluchtend nebeneinander liegen, heranfährt.

So können ebenso viele LKWs andocken wie entsprechende Andockstationen, also Gebäudewandöffnungen/Hallentore, vorhanden sind. Dabei sind diese Andockstationen meist auf der Höhe der Ladeflächen der LKWs angeordnet, damit der Lagerboden und die Ladefläche des LKWs eine Ebene bilden und der LKW z.B. durch das Befahren durch Gabelstapler ent- und beladen werden kann. Da bei dieser Art des Ent- und Beladens jeder Gabelstapler oder sonstige Transporteinrichtung lediglich eine oder einige wenige Warenpalletten transportieren kann, ist die Art des Be- und Entladens sehr zeitintensiv. Auch kann der zu be- und entladende LKW während der gesamten Zeit des Be- und Entladens nicht von der Andockstation wegbewegt werden.

Mit dem Logistiksystem des Dokuments EP 1 808 387 A2 wird ein System offenbart, bei dem die zu be- und entladende Fracht auf einer Güterplattform, auch als Plattform oder Ladungsträger bezeichnet, gelagert wird und die gesamte Plattform mitsamt der Fracht vom LKW bzw. auf den LKW in einem Arbeitsvorgang verfrachtet wird. D.h., die gesamte Plattform mit den Gütern ist in einem Schritt an ein Fahrzeug übergebbar oder kann in einem Schritt von einem Fahrzeug übernommen werden.

Ein Großteil der auf dem Landweg transportierten Waren wird allerdings nicht ausschließlich im Verteilverkehr bewegt, sondern zusätzlich im sogenannten kombinierten Verkehr oder Kombiverkehr. Hierunter wird verstanden, dass die Waren zunächst im Schienenverkehr bewegt werden, und vom Schienenverkehr auf den - straßengebundenen - Verteilverkehr umgeladen werden. Die Kombination der Verkehrssysteme des Schienenverkehrs und des Straßenverkehrs ist wesentliche Voraussetzung für eine funktionierende Verkehrsinfrastruktur und somit für einen effizienten und attraktiven Wirtschaftsstandort. Der Transport von Waren per Schienenverkehr ist insbesondere bei der Beförderung von großen Mengen von Waren über lange Strecken mit hoher Transportsicherheit vorteilhaft. Die Verlagerung von Warentransporten auf die Schiene leistet zudem einen Beitrag zur Reduzierung des CO₂-Ausstoßes. Demgegenüber ist die von dem straßengebundenen Warenverkehr gewährleistete Flexibilität im Warentransport für die Lieferung der Waren "auf den letzten Kilometern" unerlässlich. Bei bekannten Knotenpunkten, an denen Waren vom Schienenverkehr auf den Straßenverkehr umgeladen werden, kommt es aufgrund aufwändiger Rangierarbeiten und der zeitaufwändigen Entladung der Schienenfahrzeuge zu großen Verzögerungen, und es ist ein immenser baulicher Aufwand notwendig, um ausreichende Ladekapazitäten vorzusehen. Der Ausbau bestehender Infrastruktursysteme ist aufgrund des in Stadtgebieten beschränkten Platzbedarfs erschwert.

Ein bekannter Ansatz, den Wechsel der Waren vom Schienentransport zum Straßentransport zu beschleunigen, ist darin gesehen worden, die Waren "begleitet" zu transportieren, was bedeutet, dass die Verladeeinheiten, beispielsweise Container, auf Straßenfahrzeugen samt Zugmaschine und Fahrpersonal auf Züge verladen werden, und diese am jeweiligen Zielort unmittelbar nach Verlassen des Schienenfahrzeugs ihre Fahrt aufnehmen. Bereits aufgrund der transportierten Personen und Zugmaschinen ist dieser Ansatz auf logistischen und energietechnischen Gründen ineffizient.

Das Dokument DE-A-198 50515 öffenbart ein Logistiksystem zur Übergabe eines Ladungsträgers zu Fahrzeugen sowie eine Übergabestation nach dem Oberbegriff der Ansprüche 1, 14.

Der Erfindung lag somit die Aufgabe zugrunde, das Logistiksystem der eingangs genannten Art derart weiterzuentwickeln, dass dessen Anbindung an den kombinierten Warenverkehr ermöglicht wird und insbesondere zu einer gesteigerten Transporteffizienz von Waren im kombinierten Verkehr führt.

Die Erfindung löst die ihr zugrunde liegende Aufgabe bei einem Logistiksystem nach Anspruch 1.

Die Erfindung macht sich hierbei die Erkenntnis zunutze, dass der Zeitbedarf für das Entladen von Schienenfahrzeugen beim Übergang vom Schienenverkehr zum Verteilverkehr einen wesentlichen Flaschenhals darstellt. Eine Verkürzung des Zeitbedarfs für die Entladung der Schienenfahrzeug fuhrt folglich zu einer signifikanten Effizienzsteigerung des gesamten Betriebs. Die Effizienzsteigerung wird gemäß der vorliegenden Erfindung durch die Schwenkbarkeit des Aufbaus des Schienenfahrzeugs relativ zu dessen auf der Schiene angeordnetem Unteraufbau erreicht. Anstelle des Rangierens der Schienenfahrzeuge zu einer Verladeeinheit, wie beispielsweise einem Kran oder dergleichen, ist es ausreichend, die jeweiligen Schienenfahrzeuge mit ihrem Aufbau derart zu verschwenken, dass eine Übergabestation zur Ladungsentnahme mit den Schienenfahrzeugen zusammenwirken kann. Besondere Synergieeffekte ergeben sich, wenn gemäß der Erfindung ein Ladungsträger verwendet wird, der unmittelbar aus dem Schienenfahrzeug in die Übergabestation entnehmbar ist, und auf welchem gesammelte Ladungsstücke angeordnet sind. Solche Ladungsträger sind insbesondere von der hiesigen Anmelderin bekannt. Weitere synergistische Effekte ergeben sich, wenn dieser Ladungsträger von der Übergabestation unmittelbar an ein Lager oder ein Straßenfahrzeug übergeben wird, welches ebenfalls zur Aufnahme des hierzu angepassten Ladungsträgers eingerichtet ist. Die Durchlaufzeit der Waren in einem Logistiksystem wird hierdurch signifikant verkürzt. Unter einer schwenkbaren Bewegung wird hierin vorzugsweise die Bewegung des Aufbaus in einer horizontalen Ebene verstanden. Alternativ wird die Schwenkbewegung als Parallelverschiebung in eine seitliche Richtung bezogen auf die Längsrichtung des Schienenfahrzeugs realisiert, oder als rotatorische Bewegung um eine Vertikalachse.

Das Logistiksystem gemäß der Erfindung weist vorzugsweise zusätzlich eine Lagereinrichtung zur Aufbewahrung des Ladungsträgers und/oder ein Straßenfahrzeug zum Transport des Ladungsträgers auf. Wenn, wie vorstehend, im Rahmen dieser Erfindung von einem Schienenfahrzeug oder Ladungsträger oder Straßenfahrzeug gesprochen wird, so ist implizit zu verstehen, dass gemäß bevorzugter Ausführungsformen das System auch jeweils mehrere dieser Elemente umfassen kann.

Die vorstehenden Erläuterungen bezogen sich auf einen ersten Aspekt der Erfindung. Die Erfindung löst die ihr zugrunde liegende Aufgabe gemäß einem zweiten Aspekt, der erfindungsgemäß mit dem ersten Aspekt kombinierbar ist, indem die Übergabestation als frei bewegliches, straßengebundenes Verladefahrzeug ausgebildet ist und zwei oder mehr lenkbare Antriebseinheiten aufweist. Dies stellt eine Alternative zu Übergabestationen dar, die seitlich verfahrbar auf einem Schienensystem angeordnet sind. Die Flexibilität des Andockens an Schienenfahrzeuge wird durch die frei verfahrbare Übergabestation in Form eines Verladefahrzeugs deutlich gesteigert. Das Verladefahrzeug trägt hierbei vorzugsweise die Aufnahme auf einem vom den zwei Antriebseinheiten (oder mehr Antriebseinheiten) getragenen Fahrgestell. Gemäß der Erfindung ist der Aufbau des Schienenfahrzeugs zwischen einer Transportstellung in Längsrichtung des Untergestells und einer Verladestellung hin- und herschwenkbar, wobei in der Verladestellung eine Ladeflächenöffnung des Aufbaus freigegeben ist. Erfindungsgemäß ist die Ladeflächenöffnung an einer Stirnseite des Aufbaus des Schienenfahrzeugs angeordnet.

Erfindungsgemäß sind die Ladeflächenöffnung und eine Stirnseite der Übergabestation in der Verladestellung zur Übernahme des Ladungsträgers von der Übergabestation und/oder zur Übergabe dorthin fluchtend aufeinander ausrichtbar.

Gemäß einer weiteren bevorzugten Ausführungsform weist das Logistiksystem Stützmittel auf, mittels derer der Aufbau des Schienenfahrzeugs in der Verladestellung mit dem Boden verbindbar ist. Der sich hieraus ergebene Vorteil ist, dass die Stützmittel durch die Verbindung mit dem Boden die Krafteinleitung in den Boden gewährleisten, und hierdurch Kippmomente von den Stützmitteln aufgefangen werden können. Das zieht als besonderen Vorteil nach sich, dass der Aufbau des Schienenfahrzeugs selbst nicht frei tragend sein muss. In der Transportstellung wird die Aufnahme der Gewichtskräfte und gegebenenfalls die Aufnahme von Torsionskräften, die auf den Aufbau wirken bzw. vom Aufbau auf den Unterbau ausgeübt werden, von dem Unterbau des Schienenfahrzeugs aufgenommen. In der Verladestellung übernehmen diese Aufgabe die Stützmittel. Dadurch, dass der Aufbau insgesamt geringere Anforderungen an die strukturelle Integrität erfüllen muss, ist eine signifikante Gewichtsreduktion sowie eine signifikante Reduktion der erforderlichen Bauhöhe durch das mögliche Weglassen von Stützrahmen möglich.

Vorzugsweise sind die Stützmittel als einer oder mehrere Lagerböcke oder Rampen ausgebildet und bezogen auf die Längsrichtung des Schienenfahrzeugs seitlich zu diesem beabstandet anordenbar oder angeordnet. Sind die Stützmittel als Rampen ausgebildet, können diese vorteilhaft ortsfest am Betriebsort des Logistiksystems installiert sein und beispielsweise zum Gleisbett für die Schienenfahrzeuge benachbart angeordnet werden. Diese permanente Lösung ist insbesondere für Logistikzentren mit hoher Waren-Umschlagsmenge und ausreichenden räumlichen Gegebenheiten vorteilhaft. Hierzu alternativ oder zusätzlich sind Stützmittel in Form von Lagerböcken einsetzbar. Die Lagerböcke sind insbesondere in jenen Situationen vorteilhaft, in welchen aufgrund beschränkter räumlicher Gegebenheiten keine Laderampen vorgesehen werden können oder aus wirtschaftlichen Erwägungsgründen keine solchen Rampen installiert werden sollen. Die Lagerböcke lassen sich individuell benachbart zu beispielsweise dem Gleisbett für die Schienenfahrzeuge anordnen, bevor oder nachdem das Schienenfahrzeug das Logistikzentrum erreicht hat. Durch das Anpassen der Positionierung der Lagerböcke relativ zu dem Schienenfahrzeug ist zudem eine exakte Positionierung des Schienenfahrzeugs (relativ zu dem Logistiksystem) nicht länger notwendig.

Gemäß einer alternativen, besonders bevorzugen Ausführungsform sind die Stützmittel als, vorzugsweise schwenkbare, Stützfüße an dem Aufbau des Schienenfahrzeugs ausgebildet. Wenn die Stützmittel schwenkbar sind, dann sind sie vorzugsweise zwischen der Transportstellung und der Verladestellung hin- und herschwenkbar, besonders bevorzugt von einer horizontalen Ausrichtung in Transportstellung zu einer vertikalen Ausrichtung in Verladestellung. Alternativ sind die Stützmittel in der Verladestellung in eine angewinkelte Stellung schwenkbar, vorzugsweise in einem Winkelbereich von bis zu 45° zur Vertikalen. Als vorteilhaft an den Stützmitteln wird angesehen, dass sie mit dem Schienenfahrzeug jederzeit mit transportierbar sind, und somit ein Verschwenken des Aufbaus des Schienenfahrzeugs in die Verladestellung zum sukzessiven Zusammenwirken mit einer Übergabestation des erfindungsgemäßen Logistiksystems ermöglichen, selbst wenn keine Stützmittel hierfür am Verladeort vorgesehen sind.

Gemäß einer weiteren bevorzugten Ausführungsform des Logistiksystems ist der Aufbau des Schienenfahrzeugs passiv drehbar auf dem Unterbau des Schienenfahrzeugs gelagert. Das Auslösen der Schwenk- bzw. Drehbewegung zwischen der Transportstellung und der Verladestellung wird hierbei mittels externer Antriebsmittel gewährleistet, beispielsweise manuell oder motorisch unterstützt. Die motorische Unterstützung kann beispielsweise auch von der verfahrbaren Übergabestation gewährleistet werden. Vorzugsweise wird als Lager eine Drehverbindung vorgesehen, die keine Kippmomente aufnimmt, oder jedenfalls eine Rotationsachse aufweist, die in einem bestimmten Winkelbereich variieren kann, so dass wenigstens in diesem Winkelbereich keine Aufnahme von Kippmomenten erfolgt. Ein bevorzugter Winkelbereich liegt bei 0° bis 10°. Beispielsweise eignen sich als Lager hierfür Zapfengelenke oder Kugelgelenke. Der sich hieraus ergebene Vorteil wird darin gesehen, dass die statische Überbestimmtheit, die mit einer kippstabilen Lagerung in Kombination mit den Stützmitteln erzeugt würde, vermieden wird. Der Verschleiß des Lagers wird hierdurch reduziert, und das Gewicht des Schienenfahrzeugs insgesamt weiter reduziert, da die Dimensionierung des Lagers entsprechend klein gewählt werden kann, und keine zusätzlichen Stabilisierungsmaßnahmen, abgesehen von den Stützmitteln, vorgesehen werden müssen.

Gemäß einer weiteren bevorzugten Ausführungsform der Erfindung sind eine oder mehrere unten an dem Aufbau angeordnete, mit den Stützmitteln zusammenwirkende Rollen zur Unterstützung der Schwenkbewegung zwischen der Transportstellung und der Verladestellung vorgesehen. Diese Rollen dienen dem Ziel, die Kraft zu reduzieren, welche zum Ausführen der Schwenkbewegung erforderlich ist. Wenn die Stützmittel gemäß einer bevorzugten Ausführungsform als Bock oder Rampe ausgebildet sind, sind die Rollen vorzugsweise an der Unterbodenfläche des Aufbaus angeordnet. Wenn die Stützmittel gemäß einer alternativen bevorzugten Ausführungsform als Stützfüße ausgebildet sind, sind die Rollen vorzugsweise unten an den Füßen angeordnet.

Vorzugsweise sind eine oder mehrere, vorzugsweise sämtliche der Antriebseinheiten der Übergabestation mittels einer elektronischen Steuereinheit fernsteuerbar. Die eine oder mehreren Antriebseinheiten weisen weiter vorzugsweise jeweils mindestens zwei Achsen auf.

Gemeinsam mit der, vorzugsweise fernsteuerbaren, Steuereinheit ist auf diese Weise mittels eines Mehrachsantriebs ein Transport auf befestigten und unbefestigten Untergründen prinzipiell ermöglicht. Je höher die auf die Ladungsträger aufgebrachte Last ist, desto vorteilhafter wird es allerdings angesehen, einen befestigten Untergrund für das Verfahren der Übergabestation vorzusehen.

Gemäß einer besonders bevorzugten Ausführungsform der Erfindung sind die Achsen der einen beziehungsweise der mehreren Antriebseinheiten jeweils separat lenkbar, und/oder sind die Antriebseinheiten relativ zu der Übergabestation drehbar an dieser gelagert. Hierdurch wird, ebenfalls vorzugsweise in Verbindung mit der elektronischen Steuereinrichtung, die Möglichkeit vorgesehen, die Übergabestation durch separates Ansteuern der verschiedenen Achsen beziehungsweise Antriebseinheiten in verschiedenen Betriebsarten zu verfahren. Die Übergabestation kann hierdurch so bewegt werden, dass die beiden Antriebseinheiten entweder in Fahrtrichtung der Antriebseinheiten hintereinander, quer zur Fahrtrichtung nebeneinander, oder sowohl in Fahrtrichtung als auch seitlich zueinander versetzt bewegt werden. Der in der Aufnahme angeordnete Ladungsträger beziehungsweise die Aufnahme selbst kann hierdurch in Längsrichtung oder Querrichtung oder in schräger Ausrichtung verfahren werden. Dies ermöglicht eine maximal flexible Anfahrbewegung an den in die Verladestellung geschwenkten Aufbau des Schienenfahrzeugs. Rangierzeiten sowohl für das Schienenfahrzeug als auch für die Übergabestation werden hierdurch weiter verkürzt.

Die Erfindung wird dadurch weitergebildet, dass die Übergabestation eine Hubeinrichtung zur Höhenverstellung der Aufnahme aufweist. Die Hubeinrichtung ist vorzugsweise dazu ausgelegt, die Aufnahme mit oder ohne darauf angeordnetem Ladungsträger in der Höhe zu verfahren. Hierdurch sind unterschiedliche Ladeflächen-Niveaus zwischen dem Schienenfahrzeug und einem Lager- oder Straßenfahrzeug kompensierbar. Je nachdem, welche Einheit von der Übergabestation angefahren wird, kann mittels der Hubeinrichtung vor der Übergabe oder Übernahme des Ladungsträgers die entsprechende Höhenposition angefahren werden.

Weiter vorzugsweise weist die Aufnahme der Übergabestation eine mit dem Ladungsträger koppelbare Einrichtung zum Ziehen und/oder Schieben des Ladungsträgers auf. Mittels dieser Einrichtung ist eine Entnahme des Ladungsträgers aus dem Aufbau des Schienenfahrzeugs genauso möglich, wie eine Entnahme des Ladungsträgers aus einem Straßenfahrzeug oder Lager. Gleiches gilt für die jeweils umgekehrte Transportrichtung. Die Einrichtung zum Ziehen und/oder Schieben des Ladungsträgers ist vorzugsweise dazu eingerichtet, kraft- und/oder formschlüssig mit dem Ladungsträger gekoppelt zu werden und diesen mittels eines Antriebsmittels ziehend oder schiebend aus der jeweiligen Ladeeinheit in die Aufnahme zu bewegen, oder umgekehrt.

Gemäß einer weiteren bevorzugten Ausführungsform weist die Übergabestation einen Positionsfinder auf, welcher mit der Steuereinheit kommunizierend verbunden und dazu ausgebildet ist, ein Signal, vorzugwelse an die Steuereinheit, abzugeben, wenn die Anwesenheit eines Reflektors detektiert wird. Der Reflektor wird hierbei vorzugsweise an dem Aufbau des Schienenfahrzeugs vorgesehen, besonders bevorzugt in einem vorbestimmten, kalibrierten Bereich in der Nähe der Ladeflächenöffnung. Durch das Bereitstellen des Positionsfinders wird es dem Logistiksystem ermöglicht, die

Übergabestation durch Verfahren in der horizontalen Richtung auf eine den Reflektor aufweisenden Gegenstand, vorzugsweise das Fahrzeug und besonders bevorzugt die Ladekante des Fahrzeugs auszurichten. Hierbei ist der Reflektor an dem mit dem System zusammenwirkenden Fahrzeug an einer normierten Stelle vorzugsehen, damit die Steuereinheit in der Lage ist, beim Detektieren der Anwesenheit des Reflektors die Position des Fahrzeugs relativ zu der Übergabestation zu bestimmen. Weiter vorzugsweise weist die Übergabestation zwei oder mehr Abstandssensoren auf, welche jeweils zum Erfassen eines Abstandes zu einem entfernten Objekt, vorzugsweise der Ladekante des Schienenfahrzeugs, eingerichtet sind. Alternativ oder zusätzlich sind die Abstandssensoren zum Erfassen eines Abstandes der Ladekante des Straßenfahrzeugs eingerichtet. Die Abstandssensoren dienen dem Zweck, nach erfolgtem Ausrichten des entfernten Objekts, beispielsweise des Fahrzeugs vor einer Andockstation zu ermitteln, ob das Objekt bzw. Fahrzeug schräg relativ zu der hinter der Andockstation vorgefahrenen Übergabestation angeordnet ist. Hierzu sind die Abstandssensoren vorzugsweise vorab auf einen Zustand "gerade" kalibriert worden.

Die Erfindung löst die ihr zugrunde liegende Aufgabe zudem, indem sie eine Übergabestation für ein Logistiksystem zur Übergabe eines Ladungsträgers zu Fahrzeugen, und/oder zur Übernahme eines Ladungsträgers von Fahrzeugen, für ein Logistlksystem nach einer der vorstehend erläuterten bevorzugten Ausführungsformen angibt, wobei die Übergabestation nach Anspruch 14 ausgebildet ist.

Hinsichtlich bevorzugter Ausführungsformen und Weiterbildungen der erfindungsgemäßen Übergabestation wird auf die vorstehenden Ausführungen zum erfindungsgemäßen Logistiksystem hierin verwiesen.

Die Erfindung wird im Folgenden anhand bevorzugter Ausführungsbeispiele und unter Bezugnahme auf die beigefügten Figuren näher beschrieben. Hierbei zeigen:
- Figur 1: eine schematische Darstellung eines Logistiksystems gemäß einem ersten Ausführungsbeispiel der Erfindung,
- Figur 2: eine schematische Darstellung eines Logistiksystems gemäß einem zweiten Ausführungsbeispiel der vorliegenden Erfindung,
- Figur 3: eine schematische Darstellung eines Logistiksystems gemäß einem dritten Ausführungsbeispiel der vorliegenden Erfindung,
- Figur 4: eine Darstellung des Betriebs einer Übergabestation gemäß der vorliegenden Erfindung,
- Figur 5: eine alternative Darstellung des Betriebs der Übergabestation aus Figur 10,
- Figur 6: eine weitere Ansicht des Logistiksystems aus Figur 2,
- Figur 7: eine schematische Darstellung eines Logistiksystems gemäß einem vierten Ausführungsbeispiel der vorliegenden Erfindung,
- Figur 8: eine alternative Ansicht des Logistiksystems aus Figur 7,
- Figur 9: eine weitere alternative Ansicht des Logistiksystems aus den Figuren 7 und 8,
- Figur 10: eine räumliche Teilansicht eines Logistiksystems gemäß einem der bevorzugten Ausführungsbeispiele,
- Figur 11: eine Detailansicht eines Abschnitts einer Übergabestation des Logistiksystems gemäß einem der bevorzugten Ausführungsbeispiele,
- Figur 12: eine weitere Detallansicht des Systems aus Figur 10, und
- Figur 13: eine Seitenansicht des Systems aus Figur 10.

Bevorzugte Ausführungsformen der Erfindung werden anhand mehrerer Ausführungsbeispiele exemplarisch erläutert. Sofern identische oder funktional ähnliche Elemente In den verschiedenen Ausführungsbeispielen zum Einsatz kommen, werden diese mit identischen Bezugszeichen versehen, falls dies als zweckmäßig erachtet wird. Einige Aspekte der Erfindung sind nur in Bezug auf bestimmte Ausführungsbeispiele erläutert. Dies geschieht zum Wohl einer knappen Darstellung. Es wird ausdrücklich betont, dass die verschiedenen bevorzugten Ausführungsformen der Erfindung auch Im Zusammenhang mit den jeweils übrigen Ausführungsbeispielen kombiniert werden können, sofern sie sich nicht technisch ausschließen. Unter Berücksichtigung dieses Umstandes ist die folgende Figurenbeschreibung zu lesen.

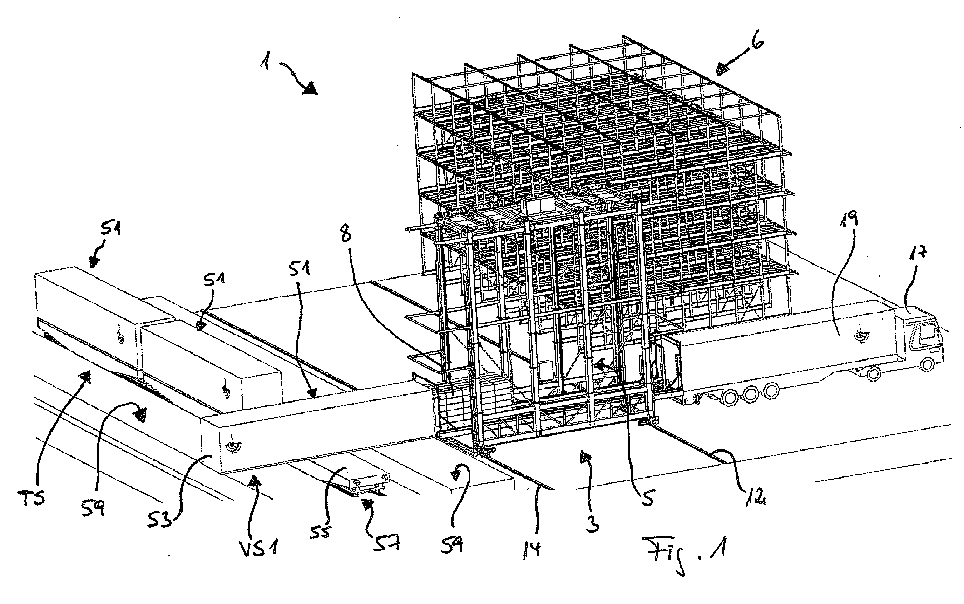

In Figur 1 ist ein Logistiksystem 1 dargestellt hinsichtlich seiner Hauptbestandteile. Das Logistiksystem 1 weist eine Übergabestation 3 auf, welche zur Übernahme bzw. Übergabe eines Ladungsträgers 8 ausgebildet ist. Die Übergabestation ist verfahrbar, und gemäß dem Ausführungsbeispiel aus Figur 1 seitlich mittels Schienen 12, 14 verfahrbar. Benachbart zu der Übergabestation 3 ist ein Lager 6 angeordnet, welches eine Vielzahl von Regalfächern aufweist, die nebeneinander und übereinander angeordnet sind. Die Übergabestation 3 ist dazu eingerichtet, eine an der Übergabestation 3 vorgesehene Aufnahme 5 in der Höhe so zu verfahren, dass wahlweise eines der Regalfächer des Lagers 6 bei entsprechendem seitlichen Verfahren der Übergabestation 3 fluchtend mit der Aufnahme 5 ausgerichtet werden kann, um eine Übernahme bzw. Übergabe des Ladungsträgers 8 vorzunehmen. Weiterhin ist benachbart zu der Übergabestation 3 ein (Straßen-) Fahrzeug 17, ausgebildet als LKW, mit einem Auflieger 19 angeordnet. Die Übergabestation 3 ist ebenso dazu eingerichtet, die Aufnahme 5 auf eine Höhe einzustellen, um eine Übergabe bzw. Übernahme des Ladungsträgers 8 zwischen der Aufnahme 5 und dem Fahrzeug 17, welches ein erstes Fahrzeug ist, vorzunehmen. Auf einer gegenüberliegenden Seite der Übergabestation 3 ist ein Zug umfassend mehrere Schienenfahrzeuge 51 abgebildet. Die Schienenfahrzeuge 51 sind als Güterwagen ausgebildet und wahlweise aneinander gekoppelt. Gezeigt sind drei Schienenfahrzeuge 51 bzw. Güterwagen, wobei die ersten beiden Schienenfahrzeuge 51 von links in Figur 1 betrachtet in einer Transportstellung TS angeordnet sind, während das dritte Schienenfahrzeug 51 von links in einer Verladestellung VS1 angeordnet ist. Die Schienenfahrzeuge 51 weisen einen Aufbau 53 auf, der zur Aufnahme des Ladungsträgers 8 angepasst ist. Andersherum lässt sich auch feststellen, dass der Ladungsträger 8 an die Innenabmaße des Schienenfahrzeugs 51 und vorzugsweise des Laderaums des Lastenfahrzeugs 17 und/oder des Lagers 6 angepasst ist.

Die Schienenfahrzeuge 51 weisen ferner jeweils einen Unterbau 55 auf, welcher mittels eines Fahrgestells auf Schienen 57 verfahrbar angeordnet ist. In der Verladestellung VS1 ist der Aufbau 53 relativ zu dem Unterbau 55 seitlich geschwenkt. Gemäß dem gezeigten Ausführungsbeispiel ist die Schwenkbewegung in Form einer Rotation um eine vertikale Achse realisiert. Der Aufbau 53 ist zu beiden Seiten des Schienenfahrzeugs 51 auf Stützmitteln 59 abgestützt, welche als Rampen ausgebildet sind. In der in Figur 1 gezeigten Stellung ist die Übergabestation 3 fluchtend sowohl auf das Schienenfahrzeug 51 als auch auf den Auflieger 19 des LKW 17 ausgerichtet. Eine etwaige Höhendifferenz zwischen der Höhe des Aufbaus 53 und der Höhe des Aufliegers 19, jeweils bezogen auf die untere Ladekante, ist mittels der Hubeinrichtung in der Übergabestation 3 kompensierbar.

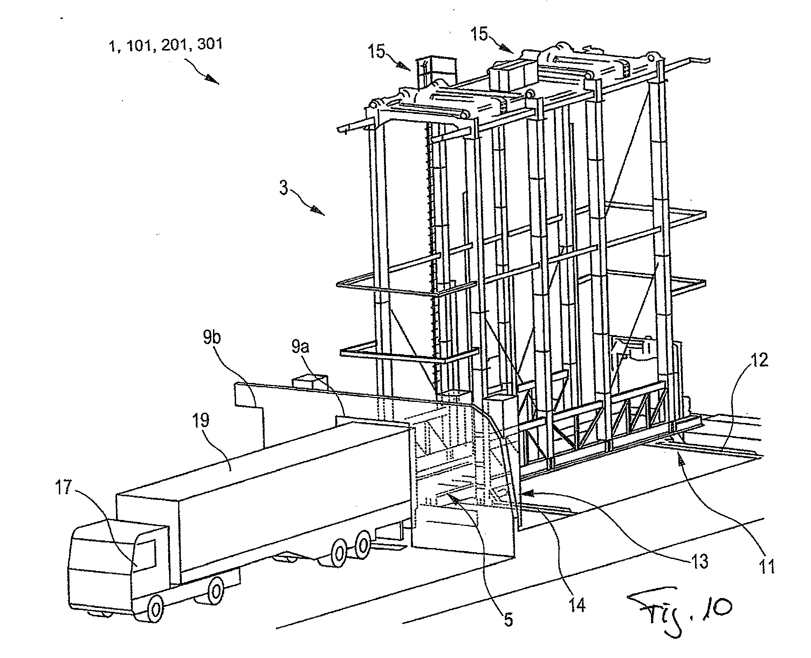

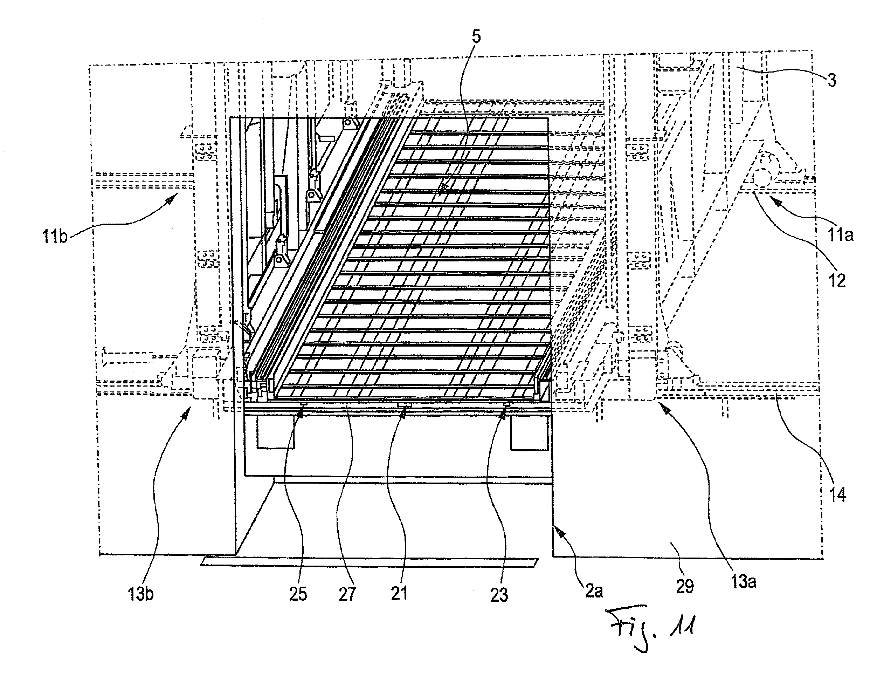

Die Steuerung der Übergabestation 3 vollzieht sich vorzugsweise wie im Zusammenhang mit den beigefügten Figuren 10 bis 13 erläutert.

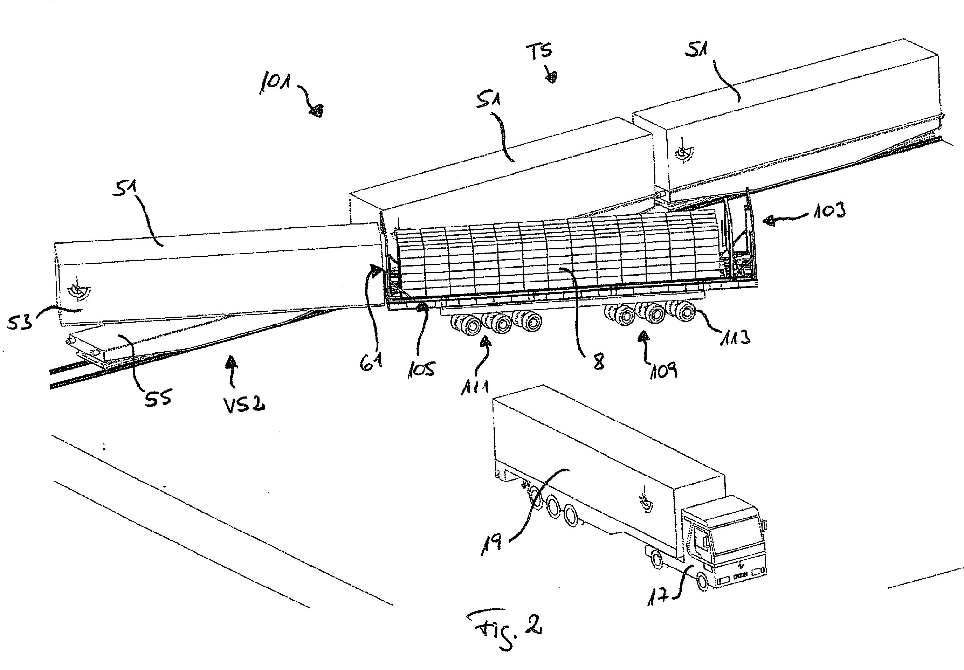

In Figur 2 ist ein Logistiksystem 101 gemäß einem zweiten Ausführungsbeispiel der Erfindung gezeigt. Das Logistiksystem 101 stimmt in wesentlichen Bestandteilen mit dem Logistiksystem 1 aus Figur 1 überein. Identische oder ähnliche Elemente sind deswegen mit identischen Bezugszeichen versehen, und es wird diesbezüglich auf die Erläuterungen zu Figur 1 verwiesen. Darüberhinaus unterscheidet sich das Logistiksystem 101 von dem Logistiksystem 1 aus Figur 1 insbesondere dadurch, dass eine Übergabestation 103 vorgesehen ist, welche als frei verfahrbares Verladefahrzeug ausgebildet ist. Die Übergabestation 103 weist eine ebenfalls höhenverstellbare Aufnahme 105 auf, welche optional mit einer (nicht dargestellten) Rahmenstruktur verbunden ist. Zudem sind eine erste Antriebseinheit 109 und eine zweite Antriebseinheit 111 angeordnet. Die erste und zweite Antriebseinheit 109, 111 weisen jeweils eine Vielzahl von lenkbaren und mit Rädern versehenen Achsen 113 auf. Der Einfachheit halber ist lediglich eine Achse mit Bezugszeichen versehen. Gemäß vorliegendem Ausführungsbeispiel weist jede Antriebseinheit 109, 111 sechs Achsen auf, von denen jeweils drei auf einer Seite der Antriebseinheit angeordnet sind.

Die Übergabestation 103 ist in der in Figur 2 gezeigten Orientierung fluchtend auf eine Ladeflächenöffnung 61 ausgerichtet, welche stirnseitig an dem Aufbau 53 des Schienenfahrzeugs 51 ausgebildet ist. Im Unterschied zu der Verladestellung VS1 gemäß Figur 1 ist der Aufbau 53 in der in Figur 2 gezeigten Verladestellung VS2 nicht im Wesentlichen rechtwinklig zu dem Unterbau 55 des Schienenfahrzeugs 51 abgewinkelt, sondern in einem kleineren Winkel, vorzugsweise etwa in einem Bereich zwischen 20° und 40°. Die Ausrichtung der Übergabestation 103 auf die Ladeflächenöffnung 61 des Aufbaus 53 des Schienenfahrzeugs 51 erfolgt mittels Lenkung der Achsen 113 der Antriebseinheiten 109, 111. Durch separate, voneinander unabhängige Lenkung der beiden Antriebseinheiten 109, 111 und gegebenenfalls zusätzlich einer separaten Anlenkung der unterschiedlichen Achsen 113 ist die Übergabestation 13 auf einer Kurvenfahrt bewegbar, sowie in verschiedenen Geradeausfahrten. Ein erster Betriebsmodus der Geradeausfahrt besteht darin, dass die Antriebseinheiten 109, 111 ohne Versatz hintereinander herfahren. Ein zweiter Modus der Geradeausfahrt besteht darin, dass die Antriebseinheiten 109, 111 auf gleicher Höhe nebeneinander herfahren, womit die Übergabestation 13 bezogen auf die Längsrichtung der Aufnahme 105 "quer" fahren würde. Ein dritter Modus der Geradeausfahrt bestünde darin, dass, wie in Figur 2 gezeigt, die erste Antriebseinheit 109 und die zweite Antriebseinheit 111 hintereinander und seitlich zueinander versetzt angeordnet und ausgerichtet sind, so dass eine Schrägfahrt der Übergabestation 103 erfolgt.

Die Ausrichtung der Übergabestation 103 auf das erste Fahrzeug 17, das Schienenfahrzeug 51 oder ein (nicht dargestelltes) Lager erfolgt wahlweise manuell, oder mittels einer elektronischen Steuereinheit. Die fluchtende Ausrichtung auf jeweils eines dieser drei Elemente erfolgt vorzugsweise unter Zuhilfenahme elektronischer Positionsfinder, besonders bevorzugt in analoger Weise wie die Positionierung der Übergabestation 3 gemäß dem ersten Ausführungsbeispiel, was in Bezug auf die Figuren 10 bis 13 beschrieben ist. Hierauf wird auch in Bezug auf die Übergabestation 103 bezüglich analoger Anwendung verwiesen.

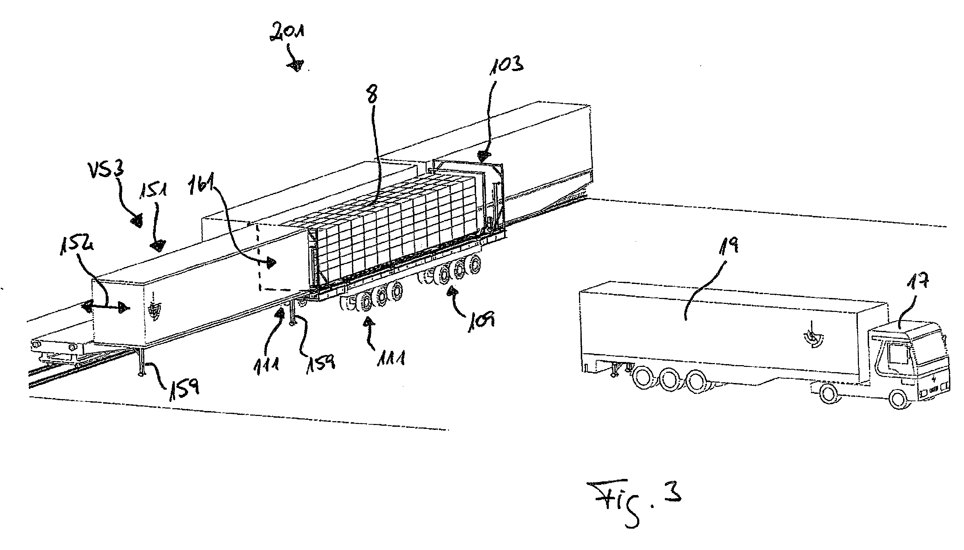

Die Figuren 3 bis 5 zeigen in verschiedenen Etappen die prinzipielle Funktionsweise der Übergabestation 103, welche als mobiles, frei verfahrbares Verladefahrzeug ausgebildet ist. Hierzu zeigt Figur 3 zunächst ein Logistiksystem 201 gemäß einem dritten Ausführungsbeispiel der Erfindung. Das Logistiksystem 201 gemäß diesem Ausführungsbeispiel unterscheidet sich von dem Logistiksystem 101, 1 der vorherigen Ausführungsbeispiele dadurch, dass als schienengebundenes Transportmittel ein Schienenfahrzeug 151 vorgesehen ist. Das Schienenfahrzeug 151 weist einen Aufbau 153 auf, welcher relativ zu einem Unterbau 155 im Wesentlichen quer zur Transportrichtung des Schienenfahrzeugs auf den entsprechenden Schienen quer an einer Transportstellung in eine Verladestellung VS3 schwenkbar ist. Figur 3 zeigt den Zustand des Schienenfahrzeugs 125 mit in Richtung des Pfeils 152 ausgestelltem Aufbau 153. Der Aufbau 153 ist mittels Stützmitteln 159 gegenüber dem Untergrund abgestützt. Stützmittel 159 sind gemäß dem Ausführungsbeispiel aus Figur 3 als Stützfüße, vorzugsweise mit Rollen, ausgebildet. Besonders bevorzugt sind die Stützfüße in der Transportstellung des Schienenfahrzeugs 151 angelegt oder entfernt.

Wenngleich Figur 3 ausschließlich das Abstützen des Aufbaus 153 mittels als Stützfüßen ausgebildeten Stützmitteln 159 zeigt, ist alternativ oder zusätzlich ein Abstützen mittels als Rampen ausgebildeten Stützmitteln, analog zu den Stützmitteln 59 gemäß Figur 1, bevorzugt. Dasselbe gilt für die Möglichkeit, das Schienenfahrzeug gemäß dem zweiten Ausführungsbeispiel der Erfindung (siehe Figur 2) in der Verladestellung VS2 lateral abzustützen. Wahlweise können auch dort Rampen und/oder Stützfüße zum Abstützen vorgesehen sein.

Die Übergabestation 103 ist in Figur 3 fluchtend auf eine Laderaumöffnung 161 des Schienenfahrzeugs 151 ausgerichtet. Zum Verbringen der Übergabestation 103 in diese Position sind die Antriebseinheiten 109, 111 entsprechend gelenkt und angetrieben worden. Figur 3 zeigt den Ladungsträger 8 in vollständig auf der Übergabestation 103 aufgenommenem Zustand.

Das Straßenfahrzeug, insbesondere der LKW 17 mit dem Anhänger bzw. Auflieger 19, befinden sich in einer Warteposition zum Empfang des Ladungsträgers 8 von der Übergabestation 103.

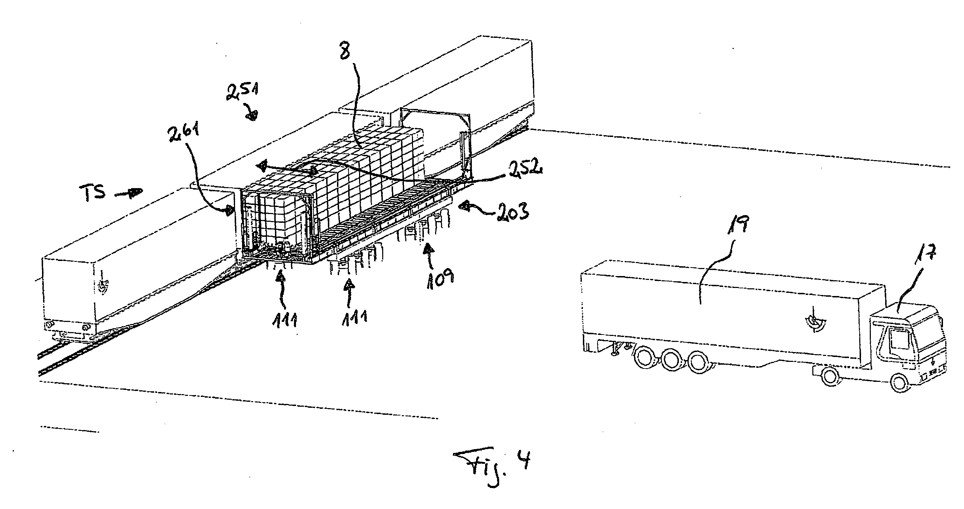

Figur 4 zeigt den Betrieb der erfindungsgemäßen Übergabestation 103 im Zusammenspiel mit einem Schienenfahrzeug 251. Das Schienenfahrzeug 251 weist zwar keinen vollständig schwenkbaren Aufbau auf. Allerdings ist alternativ dazu der Aufbau 253 mit einer in Bezug auf die Transportrichtung des Schienenfahrzeugs 251 seitlich angeordneten Ladeflächenöffnung 261 versehen. Durch die geöffnete Ladeflächenöffnung 261 hindurch ist der Ladungsträger 8 seitlich in Richtung des Pfeils 252 verschwenkbar oder entnehmbar. Der äußere Teil des Aufbaus 253 oder gesamte Aufbau 253 verbleiben bei der Verladung des Ladungsträgers 8 somit in Transportstellung. Maßgeblich ist bei der Darstellung aus Figur 4 weiter, dass die Übergabestation 203 gemäß der Erfindung zur Aufnahme des Ladungsträgers 8 quer zu ihrer Längsrichtung eingerichtet ist. Wahlweise ist die Übergabestation gemäß der Erfindung zur Aufnahme und/oder Abgabe eines Ladungsträgers 8 in Längs- und/oder Querrichtung relativ zu ihrer Längsrichtung ausgebildet. Eine wie in Figur 4 gezeigte Aufnahme in Querrichtung ermöglicht das Verladen von Ladungsträgern von und auf Schienenfahrzeuge, deren Aufbau nicht schwenkbar ist. Zum Erreichen der Verladestellung und der hierfür erforderlichen fluchtenden Ausrichtung auf das Schienenfahrzeug 251 ist die Übergabestation 203 durch synchrones und/oder unabhängiges Ansteuern und Antreiben der Antriebseinheiten 109, 111 in eine zu dem Schienenfahrzeug 251 benachbarte Stellung verfahren worden. Figur 4 zeigt den Zustand einer gerade stattfindenden Verladung des Ladungsträgers 8 in Richtung des Pfeils 252. Wie auch in Figur 3 befindet sich das Straßenfahrzeug, insbesondere LKW 17 mit dem Auflieger 19 in Wartestellung zum Empfang des Ladungsträgers 8 von der Übergabestation 203.

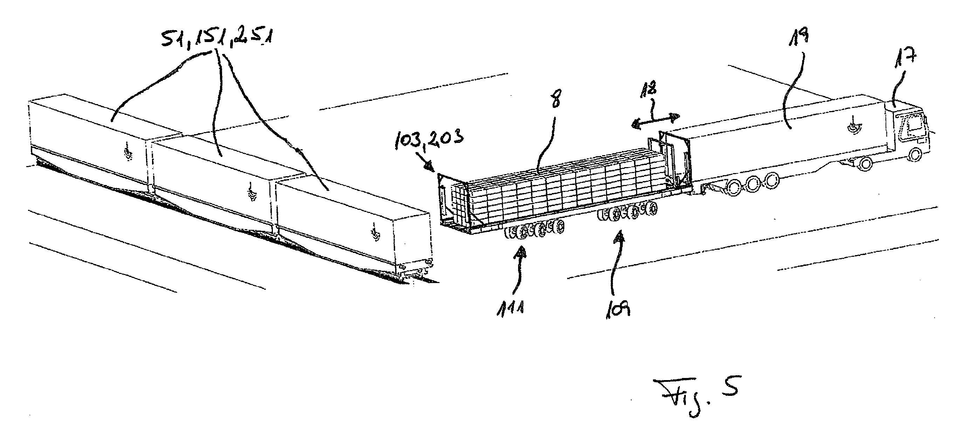

Figur 5 dient als beispielhafte Darstellung einer weiteren Etappe des Verladevorgangs des Ladungsträgers 8. Die Übergabestation, welche entweder eine Übergabestation 103 oder eine Übergabestation 203 gemäß einer der bevorzugten Ausführungsformen der Erfindung sein kann, ist nicht fluchtend auf eine Ladeflächenöffnungen eines Schienenfahrzeugs ausgerichtet, sondern auf eine korrespondierende Ladeflächenöffnung des Anhängers 19 bzw. Aufliegers des Fahrzeugs 17. Die fluchtende Ausrichtung ist derart erfolgt, dass eine Bewegung des Ladungsträgers 8 in Richtung des Pfeils 18 in den Anhänger 19 hinein oder aus ihm heraus erfolgen kann. Als Schienenfahrzeug sind gemäß Figur 5 wahlweise Schienenfahrzeuge gemäß einer der hierin beschriebenen bevorzugten Ausführungsformen vorgesehen. Zum Bewegen der Übergabestation 103, 203 zwischen den Verladepositionen am Schienenfahrzeug 51, 151, 251 und dem Straßenfahrzeug 17, 19 oder einem (nicht dargestellten) Lager wird die Übergabestation 103, 203 entlang eines beliebigen, vorbestimmbaren oder manuell erfahrbaren Kurses bewegt. Der Kurs ist vorzugsweise zusammengesetzt aus einer Kombination von Kurvenfahrten und Geradeausfahrten oder einer Aneinanderreihung von Geradeausfahrten, und wird durch die unabhängige oder synchrone Ansteuerung und den Antrieb der Antriebseinheiten 109, 111 umgesetzt.

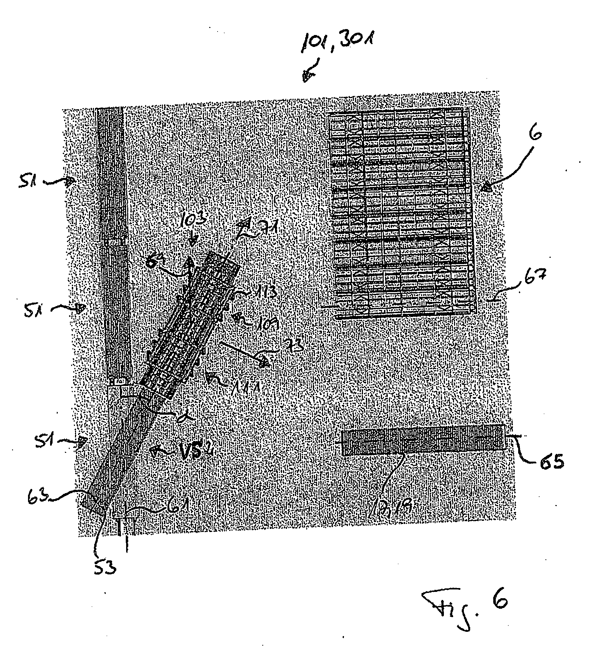

Figur 6 zeigt eine Draufsicht auf die prinzipielle Anordnung der Elemente gemäß Figur 2. Der in der Verladestellung VS2 befindliche Aufbau 53 des Schienenfahrzeugs 51 ist um einen Winkel α gegenüber der Längsrichtung, angedeutet durch Achse 61, des Schienenfahrzeugs 51 rotatorisch verschwenkt. Die Achsen 113 der ersten Antriebseinheit 109 und der zweiten Antriebseinheit 111 sind zueinander parallel in Richtung des Pfeils 69 ausgerichtet. Bei einem Betrieb der Antriebseinheiten 109, 111 erfolgt eine Bewegung der Übergabestation 103 im Wesentlichen parallel zu dem Zug aus Schienenfahrzeugen 51. Zum Verdeutlichen der Funktionsweise der Verfahrbarkeit wird auf das Folgende hingewiesen: Werden die Achsen 113 so ausgerichtet, dass alle Räder der Antriebseinheiten 109, 111 in Richtung der Längsachse der Aufnahme 105 (Figur 2) ausgerichtet sind, fährt die Übergabestation 103 in Richtung des Pfeils 71. Die zweite Antriebseinheit 111 fährt in diesem Fall spurtreu der ersten Antriebseinheit 109 hinterher. Werden die Achsen 113 der ersten Antriebseinheit 109 und der zweiten Antriebseinheit 111 so zueinander ausgerichtet, dass die Räder sich in Querrichtung zur Längsrichtung der Aufnahme (siehe Figur 2) ausrichten, fährt die Übergabestation 103 in Richtung des Pfeils 73, wobei beide Antriebseinheiten 109, 111 nebeneinander herfahren. Werden die Achsen 113 der ersten Antriebseinheit 109 in einem anderen Winkeln relativ zur Längsachse der Aufnahme ausgerichtet als die Achsen der zweiten Antriebseinheiten 111, lässt sich eine Kurvenfahrt der Übergabestation 103 realisieren, wodurch sukzessive ein fluchtendes Ausrichten auf die Längsachse 75 des Fahrzeugs 17, 19 beziehungsweise eine der Längsachsen 67 der Regalfächer des Lagers 6 erfolgt.

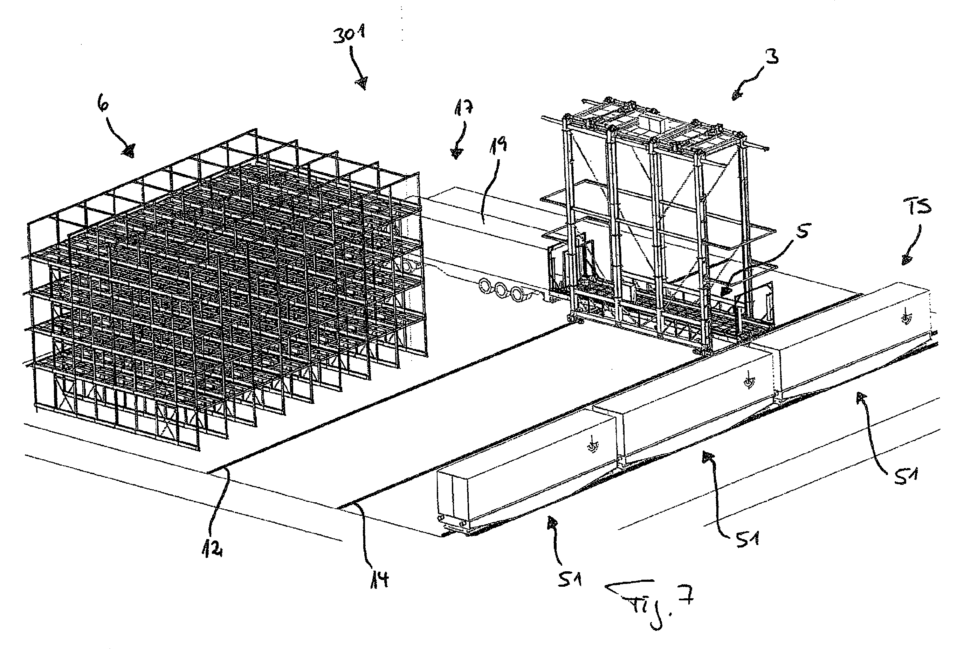

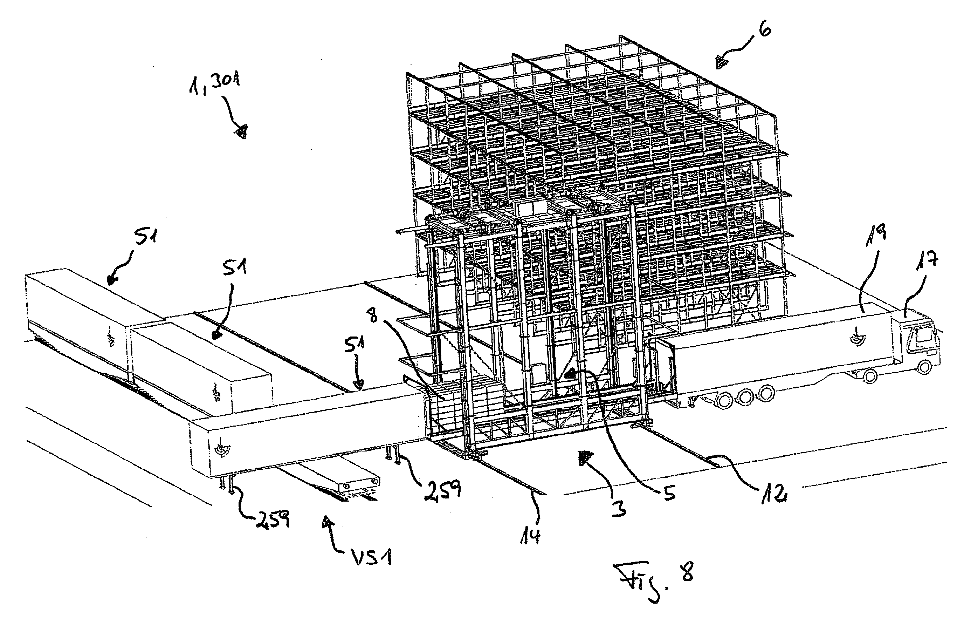

Die Ausrichtung und das Manövrieren der Übergabestation 103 erfolgt wahlweise manuell oder (teil-) automatisiert, sowie optional ferngesteuert. Etwaig notwendige Ausrichtmaßnahmen werden vorzugsweise in analoger Weise durchgeführt, wie für das erste Ausführungsbeispiel unter den nachfolgenden Figuren 10 bis 13 beschrieben wird. Die Figuren 7 bis 9 zeigen ein Logistiksystem 301 gemäß einem vierten Ausführungsbeispiel der Erfindung, welchem in wesentlichen Elementen dem Logistiksystem 1 gemäß dem ersten Ausführungsbeispiel der Erfindung gleicht. Die Darstellung des Logistiksystems 301 unterscheidet sich von derjenigen des Logistiksystems 1 aus Figur 1 dadurch, dass die Schienenfahrzeuge 51, nachdem sie aus der Transportstellung TS in die Verladestellung VS1 gebracht worden sind, von Stützmitteln 259 seitlich abgestützt werden, die als Stützfüße ausgebildet sind. Wie bereits vorstehend erläutert wurde, können die Stützmittel 251 alternativ oder zusätzlich zu den Stützmitteln 59 gemäß Figur 1 herangezogen werden, um den Aufbau des Schienenfahrzeugs 51 und mittelbar das gesamte Schienenfahrzeug 51 abzustützen. Der sich abspielende Verladeverlauf ist durch die Abfolge der Figuren 7 bis 9 illustriert. In Figur 7 befinden sich noch alle Schienenfahrzeuge in der Transportstellung TS. Die schienengebundene Übergabestation 3 ist fluchtend auf eine Ladeflächenöffnung des Anhängers 19 bzw. Aufliegers eines LKW ausgerichtet (Figuren 7, 8).

Gemäß Darstellung aus Figur 8 ist eines der Schienenfahrzeuge 51 in die Verladestellung VS1 verschwenkt. Die Ladeflächenöffnung ist fluchtend auf die Aufnahme 5 der Übergabestation 3 ausgerichtet. Der Ladungsträger 8 befindet sich im Verladevorgang zwischen dem Schienenfahrzeug 51 und der Übergabestation 3. Ausgehend von diesem Zustand ist sowohl ein Durchladen des Ladungsträgers 8 in das Innere des Anhängers 19, als auch ein anschließendes Verfahren des Ladungsträgers 8 in Richtung der Schienen 12, 14 mittels der Übergabestation 3 möglich.

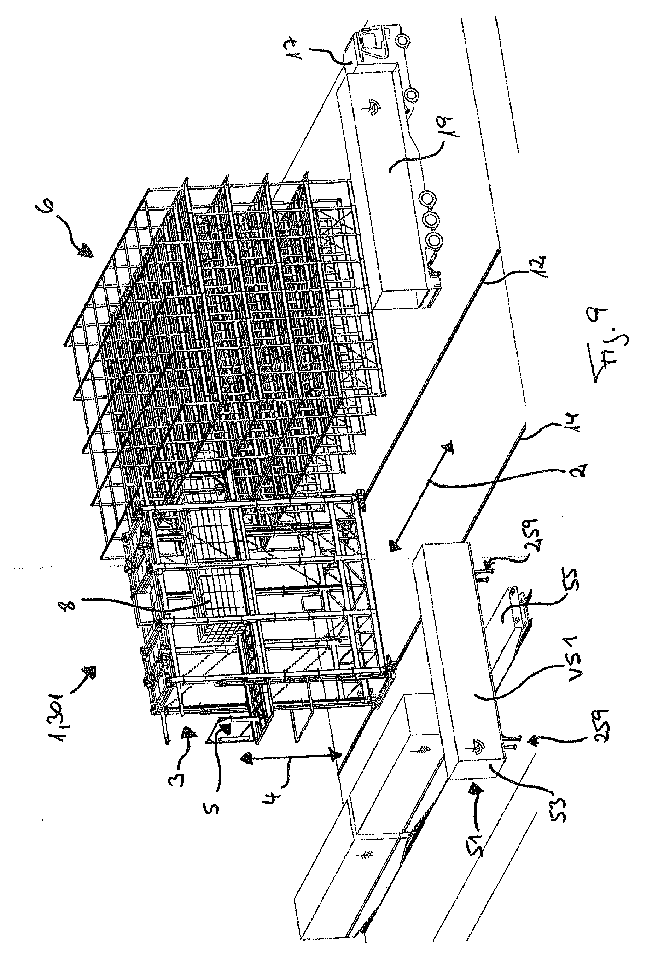

Figur 9 zeigt die Übergabestation 3 in einer anderen Betriebsposition, welche in Richtung des Pfeils 2 von der in den Figuren 7, 8 gezeigten Stellung verfahren worden ist. Zudem ist die Aufnahme 5 in Richtung des Pfeils 4 in der Höhe verstellt, und der Ladungsträger 8 befindet sich im Verladevorgang zwischen der Übergabestation 3 und einem Regalfach des Lagers 6. Der Verladevorgang kann in bekannter Weise manuell, teilautomatisiert oder vollautomatisiert erfolgen.

Die nachfolgenden Ausführungen zu den Figuren 10 bis 13 sind unter Benutzung der Bezugszeichen der Figur 1 und unter Verweis auf das erste Ausführungsbeispiel vorgenommen worden. Dies dient ausschließlich einer übersichtlichen und knappen Darstellungsweise. Die darin beschriebene Positioniermethode der Übergabestation relativ zu dem entnehmenden oder übergebenden Element (Fahrzeug oder Regal) ist gemäß einer bevorzugten Ausführungsform auch auf die Übergabestation gemäß den übrigen Ausführungsformen der vorliegenden Erfindung anzuwenden, insbesondere auf die Übergabestation der Figuren 2 bis 6.

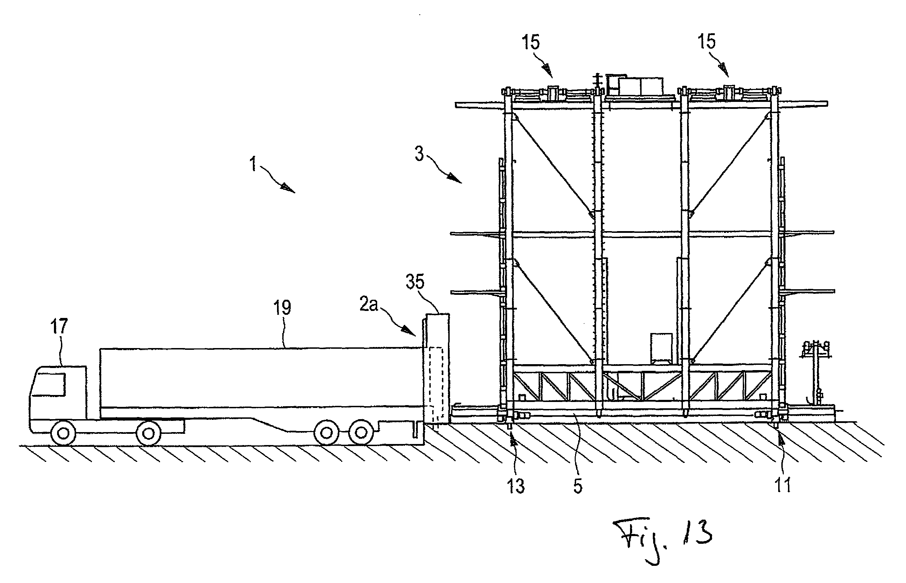

Die Figuren 10 und 13 geben eine Übersicht über ein Logistiksystem 1 gemäß der vorliegenden Erfindung an. Die schwenkbare Ausführung des Schienenfahrzeug-Aufbaus gemäß einer der bevorzugten Ausführungsformen ist zur vereinfachten Erläuterung weiterer Punkte nicht dargestellt. Das Logistiksystem 1 weist eine Übergabestation 3 auf, welche eine Aufnahme 5 zur Übernahme einer Plattform bzw. eines Ladungsträgers von einem Fahrzeug, und/oder zur Übergabe der Plattform oder des Ladungsträgers an ein Lager aufweist. Die Übergabestation 3 ist innerhalb einer Halle 7 angeordnet, welche in Figur 1 angedeutet ist. Die Halle 7 weist mehrere Andockstationen 9a, 9b auf, die jeweils eine Ausnehmung zum Annähern eines Fahrzeugs an die Übergabestation 3 aufweisen. Als Fahrzeug 17 ist beispielhaft ein LKW mit einem Anhänger 19 abgebildet. Der Anhänger 19 weist einen Innenraum mit Standardabmessungen für LKW auf, oder ist zum Tragen einer Plattform mit Abmessungen von 20-Fuß bzw. 40-Fuß Containern angepasst. Die Aufnahme 5 der Übergabestation 3 weist vorzugsweise Abmessungen auf, die zwecks Übernahme und/oder Übergabe der Plattform bzw. des Ladungsträgers an die Innenabmessungen des Fahrzeugs 17 bzw. des Anhängers 19 oder die Abmessungen der Plattform angepasst sind.

Die Übergabestation 3 ist auf zwei parallel geführten Schienen 12, 14 verfahrbar. Hierbei ist die erste Schiene 12 distal zu der Ebene der Andockstationen 9a, 9b angeordnet und wird somit als "hintere" Schiene verstanden. Die zweite Schiene 14 ist proximal zu der Ebene der Andockstationen 9a, 9b angeordnet und wird somit als "vordere" Schiene verstanden. Auf der ersten Schiene 12 ist ein erster Antrieb 11 vorgesehen. Auf der zweiten Schiene 14 ist ein zweiter Antrieb 13 vorgesehen. Siehe bezüglich des Antriebs auch Figur 2. Die Übergabestation 3 weist ferner eine Hubeinrichtung 15 auf, die zum Anheben und/oder Absenken der Aufnahme 5 eingerichtet ist.

In Figur 5 ist ein weiterer Einblick auf die Ausgestaltung der Übergabestation 3 des Logistiksystems 1 (siehe Figur 10, 13) gegeben. Die Übergabestation 3 weist im Bereich der Aufnahme 5 an einer Vorderkante 27, welche optional der Aufnahme 5 oder einem in der Höhe stationären Bauteil der Übergabestation 3 zugeordnet ist, einen Positionsfinder 21 auf. Der Positionsfinder 21 ist vorzugsweise als optische und/oder akustische Sender/Empfänger-Einheit ausgebildet. Neben dem Positionsfinder 21 sind an der Vorderkante 27 ein erster Abstandssensor 23 und ein zweiter Abstandssensor 25 angeordnet.

Der Positionsfinder 21, der Abstandssensor 23 und der Abstandssensor 25 sind im Bereich der Andockstation 9a angeordnet, wenn die Übergabestation 3 in diesen Bereich verfahren worden ist.

In der gezeigten Darstellung ist die Vorderkante 27 im Wesentlichen parallel zu einer die Andockstationen 9a, 9b und Weitere (nicht dargestellt) verbindende Vorderwand 29 ausgerichtet.

Die Übergabestation 3 wird auf der ersten Schiene 12 und der zweiten Schiene 14 durch den ersten und zweiten Antrieb 11, 13 bewegt. Der erste Antrieb 11 weist hierbei zwei elektrische Antriebsmotoren 11 a, 11 b auf, während der zweite Antrieb 13 zwei elektrische Antriebsmotoren 13a, 13b aufweist. Die elektrischen Antriebsmotoren 11a, 11b, 13a, 13b sind jeweils an Eckbereichen der Übergabestation 3 angeordnet und sorgen somit für eine kippstabile Anordnung der Übergabestation 3.

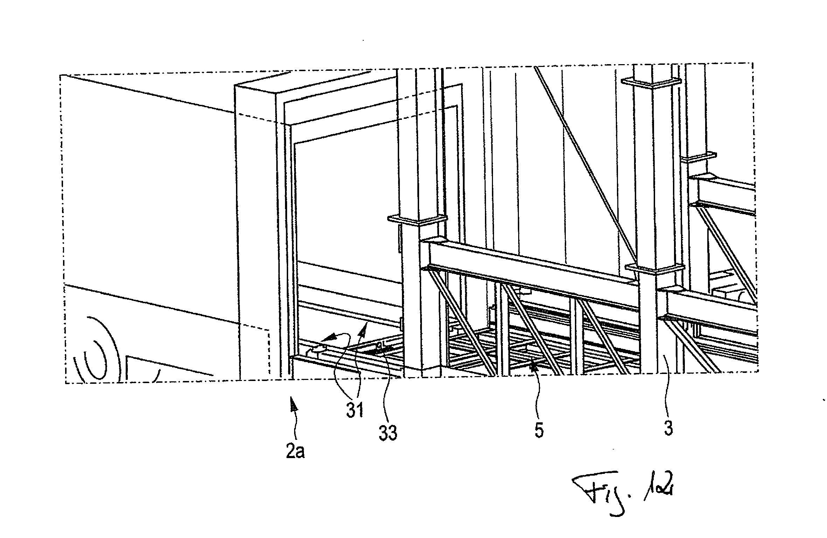

In Figur 12 ist ein Blick auf eine Andockstation 9a von der Seite der Übergabestation 3 aus gezeigt, wobei der Anhänger 19 sich in der Andockstation 9a in an die Übergabestation 3 angenäherter Position befindet. An dem Anhänger 19 ist ein Reflektor 33 angebracht. Der Reflektor 33 befindet sich vorzugsweise relativ zur Symmetrieachse des Anhängers in Längsrichtung an der gleichen Position wie der Positionsfinder 21 in Bezug auf die Symmetrieachse in Längsrichtung der Aufnahme 5 (siehe Figur 2). Auf diese Weise wird sichergestellt, dass sowohl die Aufnahme 5 als auch der Anhänger 19 im Wesentlichen mittig zur Andockstation 9a ausgerichtet werden, Im Inneren des Anhängers 19 ist ein Schienensystem 31 vorgesehen, welches ein Einführen oder Ausführen einer Plattform bzw. eines Ladungsträgers aus dem Anhänger 19 heraus bzw. In ihn hinein und in die Aufnahme 5 hinein oder aus der Aufnahme 5 heraus erleichtert.

Optional weist die Übergabestation 3 ein sogenanntes Regalbediengerät auf, welches dazu eingerichtet ist, die Plattform oder den Ladungsträger im Bereich der Ladekante des Anhängers 19 zu erfassen und zu ziehen oder zu drücken. Gemäß einer weiteren bevorzugten Alternative ist das Regalbediengerät dazu eingerichtet, die Plattform oder den Ladungsträger mittels Eingreifen in das Innere des Laderaums des Anhängers 19 zu untergreifen und zu erfassen.

Unter Bezugnahme auf die vorstehenden Figuren wird nachfolgend der Betrieb des erfindungsgemäßen Logistiksystems und der erfindungsgemäßen Übergabestation beschrieben, sowie das erfindungsgemäße Verfahren erläutert.

Zunächst wird das Fahrzeug 17 im Bereich einer Andockstation 9a bereitgestellt und an den Verladebereich, in welchen die Übergabestation 3 verfahrbar ist, angenähert. Die Übergabestation 3 wird in den Bereich der Andockstation 9a verfahren. Hierbei arbeiten die Antriebe 11a, 11 b, 13a, 13b vorzugsweise im Synchronbetrieb, was ein gleichmäßiges Fortbewegen auf der ersten Schiene 12 und der zweiten Schiene 14 gewährleistet. Die Verfahrbewegung der Übergabestation 3 wird gestoppt, sobald der Positionsfinder 21 die Anwesenheit des an dem Anhänger 19 des Fahrzeugs 17 vorgesehenen Reflektors 33 detektiert. Die Position der Antriebe 11 a, 11 b, 13a, 13b wird gespeichert, vorzugsweise von einer die Verfahrbewegung steuernden elektronischen Steuereinheit.

Nach diesem ersten Ausrichten der Übergabestation 3 auf die Position des Fahrzeugs 17 bzw. des Anhängers 19 des Fahrzeugs 17 veranlasst die Steuereinheit ein Umschalten des Betriebs der Antriebe 11 a, 11 b, 13a, 13b in einen Asynchronbetrieb. Dies geschieht insbesondere dann, wenn die Abstandssensoren 23, 25 Abstandswerte an die elektronische Steuereinheit übermitteln, die eine Schrägstellung des Fahrzeugs bzw. des Anhängers des Fahrzeugs relativ zu der Vorderkante 27 der Übergabestation 3 repräsentieren. Die elektronische Steuereinheit berechnet den Winkel dieser Schrägstellung. Als Resultat dieser Berechnung werden Steuerbefehle generiert, die den ersten Antrieb 11 bzw. die Antriebsmotoren 11a, 11b und den zweiten Antrieb 13 bzw. die Antriebsmotoren 13a, 13b derart unterschiedlich ansteuern, dass der berechnete Winkel auf null reduziert wird. Vorzugsweise wird der Winkel durch Verfahren mittels der Antriebe 11a, 11b auf der distalen ersten Schiene 12 herbeigeführt, während die Antriebsmotoren 13a, 13b durch Verfahren auf der proximalen zweiten Schiene 14 die Position der Übergabestation 3 derart nachstellen, dass der Positionsfinder 21 stets die Anwesenheit des Reflektors 33 detektiert.

Ist der Winkel auf den Wert null verringert, ist die Aufnahme 5 der Übergabestation 3 fluchtend auf die in dem Fahrzeug 17 vorgesehene Plattform bzw. auf den Laderaum des Fahrzeugs ausgerichtet. Sodann erfolgt die Übernahme der Plattform bzw. des Ladungsträgers aus dem Fahrzeug oder die Übergabe der Plattform bzw. des Ladungsträgers an das Fahrzeug. Nach vollendeter Übernahme bzw. Übergabe werden der erste Antrieb und der zweite Antrieb auf Befehl derart asynchron gesteuert, dass die zuvor gespeicherte Position der Übergabestation wieder eingenommen wird. Hierdurch wird die Übergabestation von der Betriebsstellung "mit Fahrzeug fluchtend" wieder in die Betriebsstellung "quer zu Schienen 12, 14" bzw. "quer zur Beförderungsrichtung für das Lager" ausgerichtet. Ist diese verfahrbereite Position der Übergabestation erreicht, stellt die elektronische Steuereinheit von dem asynchronen Betrieb der Antriebe 11, 13 auf den synchronen Betrieb der Antriebe 11, 13 um. Die Übergabestation kann nunmehr die übernommene Plattform bzw. den übernommenen Ladungsträger durch Betätigen der Hubvorrichtung und Verfahren der Übergabestation entlang der Schienen 12, 14 zu einem vorbestimmten Ort verbringen, um die Plattform bzw. den Ladungsträger entweder an ein anderes Fahrzeug im Bereich einer weiteren Andockstation, beispielsweise Andockstation 9b, zu übergeben, oder um die Plattform bzw. den Ladungsträger an einen mit der Übergabestation 3 erreichbaren Lagerort zu überführen.

## Patentansprüche

1. Logistiksystem (1,101) zur Übergabe eines Ladungsträgers (8) zu Fahrzeugen, und/oder zur Übernahme des Ladungsträgers von Fahrzeugen (17,51), mit
- einem Ladungsträger, welcher im Wesentlichen Ausmaße aufweist, die der Ladefläche der Fahrzeuge angepasst sind, und
- einer verfahrbaren Übergabestation (3,103), die eine Aufnahme (5,105) aufweist, auf welcher der Ladungsträger zur Anlage kommt, wobei der Ladungsträger zwischen einem ersten Fahrzeug (17), vorzugsweise ausgebildet als Straßenfahrzeug, und der Aufnahme und/oder zwischen einem Lager (6) und der Aufnahme förderbar ist, wobei die Übergabestation als frei bewegliches straßengebundenes Verladefahrzeug ausgebildet ist und zwei oder mehr lenkbare Antriebseinheiten (109,111) aufweist,
- mit einem zweiten Fahrzeug (51), das als Schienenfahrzeug, insbesondere als Güterwagen, ausgebildet ist, einen Unterbau (55) mit einem Fahrgestell und einen Aufbau (53) mit einer Ladefläche für einen oder mehrere Ladungsträger aufweist,
**dadurch gekennzeichnet, dass** der Aufbau relativ zu dem Unterbau schwenkbar und die Übergabestation zur Übernahme des Ladungsträgers von dem Schienenfahrzeug
und/oder zur Übergabe dorthin angepasst ist, wobei der Aufbau des Schienenfahrzeugs zwischen einer Transportstellung (TS) in Längsrichtung des Unterbaus und einer Verladestellung (VS1) hin- und herschwenkbar ist, wobei in der Verladestellung eine Ladeflächenöffnung (61) des Aufbaus freigegeben ist, derart, dass die Ladeflächenöffnung und eine Stirnseite der Übergabestation in der Verladestellung zur Übernahme des Ladungsträgers von der Übergabestation und/oder zur Übergabe dorthin fluchtend aufeinander ausrichtbar sind, wobei der Ladungsträger verschiebbar und/oder ziehbar ist.

2. Logistiksystem nach einem der vorstehenden Ansprüche,
**gekennzeichnet durch** Stützmittel (59,159), mittels derer der Aufbau des Schienenfahrzeugs in der Verladestellung mit dem Boden verbindbar ist.

3. Logistiksystem nach Anspruch 2,
**dadurch gekennzeichnet, dass** die Stützmittel als einer oder mehrere Lagerböcke oder
Rampen ausgebildet und bezogen auf die Längsrichtung des Schienenfahrzeugs seitlich zu diesem beabstandet anordenbar oder angeordnet sind.

4. Logistiksystem nach Anspruch 2,
**dadurch gekennzeichnet, dass** die Stützmittel als, vorzugsweise schwenkbare, Stützfüße (259) an dem Aufbau des Schienenfahrzeugs ausgebildet sind.

5. Logistiksystem nach einem der vorstehenden Ansprüche,
**dadurch gekennzeichnet, dass** der Aufbau des Schienenfahrzeugs passiv drehbar auf dem Unterbau des Schienenfahrzeugs gelagert ist.

6. Logistiksystem nach einem der Ansprüche 2 bis 5,
**gekennzeichnet durch** eine oder mehrere unten an dem Aufbau angeordnete, mit den Stützmitteln zusammenwirkende Rollen zur Unterstützung der Schwenkbewegung zwischen der Transportstellung und der Verladestellung.

7. Logistiksystem nach einem der vorstehenden Ansprüche,
**dadurch gekennzeichnet, dass** eine oder mehrere, vorzugsweise sämtliche der Antriebseinheiten der Übergabestation mittels einer elektronischen Steuereinheit fernsteuerbar sind.

8. Logistiksystem nach Anspruch 7,
**dadurch gekennzeichnet dass** die eine oder mehreren Antriebseinheiten jeweils mindestens zwei Achsen (113) aufweisen.

9. Logistiksystem nach Anspruch 8,
**dadurch gekennzeichnet, dass** die Achsen der einen oder mehreren Antriebseinheiten jeweils separat lenkbar sind, und/oder dass die Antriebseinheiten relativ zu der Übergabestation drehbar an dieser gelagert sind.

10. Logistiksystem nach einem der vorstehenden Ansprüche,
**dadurch gekennzeichnet, dass** die Übergabestation eine Hubeinrichtung (15) zur Höhenverstellung der Aufnahme aufweist.

11. Logistiksystem nach einem der vorstehenden Ansprüche,
**dadurch gekennzeichnet, dass** die Aufnahme der Übergabestation eine mit dem Ladungsträger koppelbare Einrichtung zum Ziehen und/oder Schieben des Ladungsträgers aufweist.

12. Logistiksystem nach einem der vorstehenden Ansprüche,
**dadurch gekennzeichnet, dass** die Übergabestation einen Positionsfinder (21) aufweist,
welcher mit der Steuereinheit kommunizierend verbunden und dazu ausgebildet ist, ein Signal abzugeben, wenn die Anwesenheit eines Reflektors (33) detektiert wird.

13. Logistiksystem nach einem der vorstehenden Ansprüche,
**dadurch gekennzeichnet, dass** die Übergabestation zwei oder mehr Abstandssensoren (23,25) aufweist, welche jeweils zum Erfassen eines Abstandes zu einem entfernten Objekt, vorzugsweise der Ladekante des Schienenfahrzeugs eingerichtet sind.

14. Übergabestation (3,103) für ein Logistiksystem (1,101) zur Übergabe eines Ladungsträgers (8) zu Fahrzeugen (17,51), und/oder zur Übernahme eines Ladungsträgers von Fahrzeugen nach einem der Ansprüche 1 bis 13, welche als frei bewegliches straßengebundenes Verladefahrzeug ausgebildet ist und zwei oder mehr lenkbare Antriebseinheiten (109,111) aufweist,
**dadurch gekennzeichnet, dass** die Übergabestation dazu ausgebildet ist, einen verschiebbaren und/oder ziehbaren Ladungsträger von einem Lager (6) zu ubernehmen oder
dorthin zu übergeben, und
eine Aufnahme (5,105) aufweist, auf welcher der verschiebbare und/oder ziehbare Ladungsträger zur Anlage kommt, wobei
der verschiebbare und/oder ziehbare Ladungsträger zwischen dem Fahrzeug und der Aufnahme und/oder zwischen dem Lager und der Aufnahme förderbar ist, wobei der verschiebbare und/oder ziehbare Ladungsträger zwischen dem Straßenfahrzeug und
der Aufnahme und/oder zwischen dem Lager und der Aufnahme förderbar ist, und
wobei eine Stirnseite der Übergabestation in Verladestellung (VS1) zur Übernahme und/oder zur Übergabe des Ladungsträgers zu einer Ladeflächenöffnung (61) fluchtend ausrichtbar ist.

## Claims

1. Logistics system (1, 101) for transferring a load carrier (8) to vehicles and/or for accepting the load carrier from vehicles (17, 51), with
- a load carrier, which substantially has dimensions, which are adapted to the loading surface of the vehicles, and
- a movable transfer station (3, 103), which has a receiver (5, 105), on which the load carrier comes to rest, wherein the load carrier can be conveyed between a first vehicle (17), preferably configured as a road vehicle, and the receiver and/or between a warehouse (6) and the receiver, wherein the transfer station is configured as a freely movable road-bound loading vehicle and has two or more steerable drive units (109, 111),
- with a second vehicle (51), which is configured as a rail vehicle, in particular as a goods wagon, and has a substructure (55) with a chassis and a superstructure (53) with a loading surface for one or more load carriers, **characterised in that** the superstructure is pivotable relative to the substructure and the transfer station is adapted to accept the load carrier from the rail vehicle and/or to transfer it thereto, the superstructure of the rail vehicle being pivotable back and forth between a transporting position (TS) in the longitudinal direction of the substructure and a loading position (VS1), wherein a loading surface opening (61) of the superstructure is freed in the loading position in such a way that the loading surface opening and an end face of the transfer station in the loading position, to accept the load carrier from the transfer station and/or to transfer it thereto, can be oriented to align with one another, it being possible to displace and/or pull the load carrier.

2. Logistics system according to any one of the preceding claims, **characterised by** support means (59, 159), by means of which the superstructure of the rail vehicle can be connected to the base in the loading position.

3. Logistics system according to claim 2, **characterised in that** the support means are configured as one or more bearing blocks or ramps and, in relation to the longitudinal direction of the rail vehicle, can be arranged or are arranged laterally spaced apart with respect thereto.

4. Logistics system according to claim 2, **characterised in that** the support means are configured as, preferably pivotable, support feet (259) on the superstructure of the rail vehicle.

5. Logistics system according to any one of the preceding claims, **characterised in that** the superstructure of the rail vehicle is mounted in a passively rotatable manner on the substructure of the rail vehicle.

6. Logistics system according to any one of claims 2 to 5, **characterised by** one or more rollers arranged on the superstructure at the bottom and cooperating with the support means to assist the pivoting movement between the transporting position and the loading position.

7. Logistics system according to any one of the preceding claims, **characterised in that** one or more, preferably all the drive units of the transfer station, are remotely controllable by means of an electronic control unit.

8. Logistics system according to claim 7, **characterised in that** the one or more drive units have at least two axles (113) in each case.

9. Logistics system according to claim 8, **characterised in that** the axles of the one or more drive units can in each case be steered separately, and/or **in that** the drive units are mounted on the transfer station to be rotatable relative thereto.

10. Logistics system according to any one of the preceding claims, **characterised in that** the transfer station has a lifting device (15) for the height adjustment of the receiver.

11. Logistics system according to any one of the preceding claims, **characterised in that** the receiver of the transfer station has a device that can be coupled to the load carrier to pull and/or push the load carrier.

12. Logistics system according to any one of the preceding claims, **characterised in that** the transfer station has a position finder (21), which is connected to communicate with the control unit and is configured to emit a signal when the presence of a reflector (33) is detected.

13. Logistics system according to any one of the preceding claims, **characterised in that** the transfer station has two or more distance sensors (23, 25), which are in each case set up to detect a distance from a remote object, preferably the loading edge of the rail vehicle.

14. Transfer station (3, 103) for a logistics system (1, 101), to transfer a load carrier (8) to vehicles (17, 51) and/or to accept a load carrier from vehicles according to any one of claims 1 to 13, which is configured as a freely movable road-bound loading vehicle and has two or more steerable drive units (109, 111), **characterised in that** the transfer station is configured to accept a displaceable and/or pullable load carrier from a warehouse (6) or to transfer it thereto, and has a receiver (5, 105), on which the displaceable and/or pullable load carrier comes to rest, wherein the displaceable and/or pullable load carrier can be conveyed between the vehicle and the receiver and/or between the warehouse and the receiver, wherein the displaceable and/or pullable load carrier can be conveyed between the road vehicle and the receiver and/or between the warehouse and the receiver, and wherein an end face of the transfer station, in the loading position (VS1), can be oriented to align with a loading surface opening (61) to accept and/or to transfer the load carrier.

## Revendications

1. Système logistique (1, 101) pour transférer un porteur de charge (8) vers des véhicules et/ou pour recevoir le porteur de charge de véhicules (17, 51),
- avec un porteur de charge, qui présente essentiellement des dimensions, qui sont adaptées à la surface de chargement des véhicules, et
- une station de transfert mobile (3, 103), qui présente un système de réception (5, 105), sur lequel le porteur de charge vient se fixer, dans lequel le porteur de charge est formé de préférence comme véhicule routier, entre un premier véhicule (17) et le système de réception et/ou est mobile entre un entrepôt (6) et le système de réception, dans lequel la station de transfert est formée comme véhicule de transbordement routier librement déplaçable, et présente deux ou plusieurs unités d'entraînement orientables (109, 111)
- avec un deuxième véhicule (51) qui est formé comme véhicule ferroviaire, en particulier comme wagon de marchandises, une plateforme (55) avec un châssis et une structure (53) avec une surface de chargement pour un ou plusieurs porteur(s) de charge, **caractérisé en ce que** la structure est pivotable relativement à la plateforme et la station de transfert est adaptée pour la réception du porteur de charge depuis le véhicule ferroviaire et/ou pour le transfert vers celui-ci, dans lequel la structure du véhicule ferroviaire est pivotable dans les deux sens entre une position de transport (TS) dans le sens longitudinal de la plateforme et une position de transbordement (VS1), dans lequel, dans la position de transbordement, une ouverture de surface de chargement (61) de la structure est libérée, de manière à ce que l'ouverture de la surface de chargement et une face avant de la station de transfert dans la position de transbordement pour la réception du porteur de charge depuis la station de transfert et/ou pour le transfert vers celle-ci soient alignables l'une sur l'autre, le porteur de chargeur étant poussable et/ou trainable.

2. Système logistique selon l'une des revendications qui précèdent,
**caractérisé par** des supports (59, 159) au moyen desquels la structure du véhicule ferroviaire peut être reliée au sol dans la position de transbordement.

3. Système logistique selon la revendication 2,
**caractérisé en ce que** les supports sont formés comme un ou plusieurs appuis ou rampes et peuvent être ou sont agencés par rapport au sens de la longueur du véhicule ferroviaire latéralement à distance de ce dernier.

4. Système logistique selon la revendication 2,
**caractérisé en ce que** les supports sont formés comme des pieds supports (259) de préférence pivotables sur la structure de véhicule ferroviaire.

5. Système logistique selon l'une des revendications qui précèdent,
**caractérisé en ce que** la structure du véhicule ferroviaire est logée à pivotement passif sur la plateforme du véhicule ferroviaire.

6. Système logistique selon l'une des revendications 2 à 5,
**caractérisé par** un ou plusieurs rouleaux coopérant avec les supports disposés en bas de la structure pour le support du mouvement de pivotement entre la position de transport et la position de transbordement.

7. Système logistique selon l'une des revendications qui précèdent,
**caractérisé en ce qu'**une ou plusieurs des unités d'entraînement, de préférence leur totalité, de la station de transfert sont commandables à distance au moyen d'une unité de commande électronique.

8. Système logistique selon la revendication 7,
**caractérisé en ce qu'**une ou plusieurs unités d'entraînement présentent au moins deux axes (113).

9. Système logistique selon la revendication 8,
**caractérisé en ce que** les axes d'une ou de plusieurs unités d'entraînement sont chaque fois orientables séparément et/ou que les unités d'entraînement sont logées de manière pivotable relativement à la station de transfert.

10. Système logistique selon l'une des revendications qui précèdent,
**caractérisé en ce que** la station de transfert présente une installation de levage (15) pour le réglage en hauteur du système de réception.

11. Système logistique selon l'une des revendications qui précèdent,
**caractérisé en ce que** le système de réception de la station de transfert présente une installation qui peut être couplée avec le porteur de charge pour la traction et/ou le poussage du porteur de charge.

12. Système logistique selon l'une des revendications qui précèdent,
**caractérisé en ce que** la station de transfert présente un capteur de position (21) qui est relié pour communiquer avec l'unité de commande et est formé pour émettre un signal lorsque la présence d'un réflecteur (33) est détectée.

13. Système logistique selon l'une des revendications qui précèdent,
**caractérisé en ce que** la station de transfert présente deux ou plusieurs capteurs de distance (23, 25) qui sont installés pour saisir une distance par rapport à un objet éloigné, de préférence le côté de chargement du véhicule ferroviaire.

14. Station de transfert (3, 103) pour un système logistique (1, 101) pour le transfert d'un porteur de charge (8) vers des véhicules (17, 31) et/ou pour la réception d'un porteur de charge de véhicules selon l'une des revendications 1 à 13, qui est formé comme véhicule de transbordement routier librement déplaçable et présente deux ou plusieurs unités d'entraînement orientables (109, 111),
**caractérisée en ce que** la station de transfert est formée pour réceptionner un porteur de charge poussable et/ou traînable depuis un entrepôt (6) et le transférer vers ce dernier, et
présente un système de réception (5, 105) sur lequel le porteur de charge poussable et/ou traînable vient se fixer, dans lequel
le porteur de charge poussable et/ou traînable est transportable entre le véhicule et le système de réception et/ou entre l'entrepôt et le système de réception, dans lequel le porteur de charge poussable et/ou traînable est transportable entre le véhicule routier et le système de réception et/ou entre l'entrepôt et le système de réception, et dans lequel une face avant de la station de transfert est alignable en position de transbordement (VS1) pour la réception et/ou le transfert du porteur de charge en direction d'une ouverture de surface de chargement (61).
